# EUROPEAN PATENT APPLICATION

(11) **EP 4 624 156 A1**
(43) Date of publication of application: **01.10.2025**
(21) Application number: 25158441.3
(22) Date of filing: 17.02.2025
(51) Int. Cl.: B32B 37/10, B32B 39/00, B30B 7/02

(54) **LAMINATION MACHINE AND LAMINATION METHOD**

(30) Priority: 27.03.2024 TW 113111525
(71) Applicant: Prologium Technology Co., Ltd., Taoyuan City (TW)
(72) Inventor: YANG, Szu-Nan, Taoyuan City (TW); YANG, Jui-Chi, Taoyuan City (TW); CHEN, Shao-Hsuan, Taoyuan City (TW)
(74) Representative: Cabinet Chaillot

(57) **Abstract**

The invention provides a lamination machine (1, 1', 1") and a lamination method thereof. The lamination machine (1, 1', 1") of the invention includes two length adjustment mechanisms (10), a lamination support platform (12) and a pressing mechanism (14). Each of the two length adjustment mechanisms (10) includes a plurality of direction guiding rollers (100). The lamination support platform (12) includes a plurality of pressing members (120), a plurality of feed-in rollers (122) and a plurality of feed-out rollers (124). The pressing members (120) are stacked in a single axial direction (Z). The feed-in rollers (122), the feed-out rollers (124) and the direction guiding rollers (100) drag a laminated film (3) to pass through the pressing members (120) in sequence. The pressing mechanism (14) provides a pressing force to the pressing members (120) to synchronously press the laminated film (3) located on the pressing members (120).

## Description

### BACKGROUND OF THE INVENTION

### CROSS REFERENCES TO RELATED APPLICATIONS

The present application claims priority to Taiwanese Patent Application 113111525 filed in the Taiwanese Patent Office on Mar. 27, 2024, the entire contents of which is being incorporated herein by reference.

### Field of Invention

The present invention relates to a lamination machine and lamination method, in particular to a lamination machine and lamination method a plurality of battery cells stacked in a single axial direction.

### Related Art

One of the methods for manufacturing battery cells with stacked electrode layers, at present, is to form a stacked structure by positioning and stacking the first current collector, the positive electrode, the separator, the negative electrode and the second current collector in sequence. Then, the stacked structure is pressed by an external force to make the above layers be tightly joined to complete the production of the battery cell. However, in the existing process, a horizontal lamination machine is used to laminate a single cell at a time. Therefore, to produce multiple battery cells at one time, it is necessary to deploy horizontally multiple horizontal lamination machines, which will occupy a larger floor area. Moreover, the differences between these horizontal lamination machines will also lead to differences in individual battery cells produced in a single batch.

### SUMMARY OF THE INVENTION

It is an objective of this invention to provide a lamination machine and lamination method capable of synchronous pressing a plurality of battery cells stacked in a single axial direction to solve the above-mentioned problems.

In order to implement the abovementioned, this invention discloses a lamination machine, which includes two length adjustment mechanisms, a lamination support platform and a pressing mechanism. The two length adjustment mechanisms are capable of horizontal movement. Each of the two length adjustment mechanisms includes a plurality of direction guiding rollers. The lamination support platform is disposed between the two length adjustment mechanisms. The lamination support platform includes a plurality of pressing members, a plurality of feed-in rollers and a plurality of feed-out rollers. The pressing members are stacked in a single axial direction. Each of the direction guiding rollers is disposed between two of the adjacent pressing members in the side view direction. The feed-in rollers are disposed in a feed-in end of the pressing members and the feed-out rollers are disposed in a feed-out end of the pressing members. The pressing mechanism is disposed between the two length adjustment mechanisms. The feed-in rollers, the feed-out rollers and the direction guiding rollers drag a laminated film to pass through the pressing members in sequence. The pressing mechanism provides a pressing force to the pressing members to synchronously press the laminated film located on the pressing members.

This invention also discloses a lamination method, which includes the steps of:
providing a lamination machine, including two length adjustment mechanisms and a lamination support platform disposed between the two length adjustment mechanisms, wherein the lamination support platform includes a plurality of pressing members, which are stacked in a single axial direction;
dragging a laminated film to pass through the pressing members in sequence;
pressing synchronously the laminated film located at the pressing members to form a first lamination structure;
winding the laminated film with a first predetermined length;
pressing synchronously the laminated film located at the pressing members to form a second lamination structure, wherein a part of the second lamination structure are adjacent to a part of the first lamination structure;
winding the laminated film with a second predetermined length; and
repeating the above steps to press continuously the laminated film;
wherein when an amount of the pressing members is N and N is a natural number bigger than 1, the first predetermined length is a length of the single one pressing member and the second predetermined length is 2N-1 times of the length of the single one pressing member; and
wherein when the amount of the pressing members is 2N+1 and N is a natural number, both the first predetermined length and the second predetermined length are 2N+1 times of the length of the single one pressing member.

Accordingly, the lamination support platform of this present invention has a plurality of pressing members, which are stacked in a single vertical direction (also called the z-axial direction). Therefore, the pressing mechanism can press synchronously the laminated film, which is passing through and supported by the pressing members, to form a plurality of lamination structures. In one embodiment, the laminated film may be an electrode laminated band. In this case, the lamination machine and lamination method of the invention can press the electrode laminated band to simultaneously form several battery cell structures. The processing time can be greatly reduced. Also, the pressing members are stacked in the single vertical direction. Based on the target to synchronously form several battery cell structures, the occupied floor area by the lamination machine of the invention can be significantly decreased comparing to that of using several the conventional horizontal lamination machines. Moreover, the shortage of differences of performances between the individual battery cells, processed via the different conventional machines, can also be avoided.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the lamination machine according to an embodiment of this invention.
FIG. 2 is a schematic diagram of the laminated film, which is an electrode laminated band, according to this invention.
FIG. 3 is a flow chart illustrating the lamination method according to an embodiment of this invention.
FIG. 4 is a schematic diagram of pressing the laminated film, which an amount of the pressing members is N and N is odd, according to this invention.
FIG. 5 is a schematic diagram of pressing the laminated film, which an amount of the pressing members is N and N is even, according to this invention.
FIG. 6 is a schematic diagram of pressing the laminated film, which an amount of the pressing members is 2N+1, according to this invention.
FIG. 7 is a schematic diagram of the lamination machine according to another embodiment of this invention.
FIG. 8 is a schematic diagram of the lamination machine according to another embodiment of this invention.

### DETAILED DESCRIPTION OF THE INVENTION

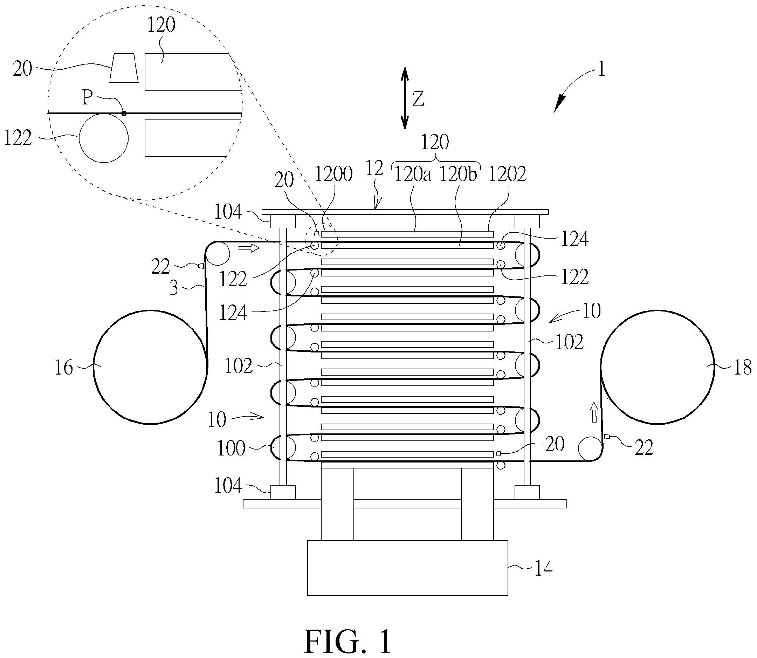

Please refer to FIG. 1, which is a schematic diagram of the lamination machine 1 according to an embodiment of this invention.

As shown in FIG. 1, the lamination machine 1 includes two length adjustment mechanisms 10, a lamination support platform 12, a pressing mechanism 14, an unwinding mechanism 16, a winding mechanism 18, two positioning sensors 20 and two edge position controller (EPC) 22. The lamination support platform 12 is disposed between the two length adjustment mechanisms 10. The lamination support platform 12 includes a plurality of pressing members 120, a plurality of feed-in rollers 122 and a plurality of feed-out rollers 124. The pressing members 120 are stacked in a single axial direction. In this embodiment, the pressing members 120 are stacked along the vertical direction (also called the z-axis) to form an upright operation platform to carry the lamination and perform pressing processes. In this embodiment, each of the pressing members 120 is composed of an upper pressing member 120a and a corresponding lower pressing member 120b.

Each of the two length adjustment mechanisms 10 includes a plurality of direction guiding rollers 100. Each of the direction guiding rollers 100 is disposed outside the pressing member 120 and corresponds to the position between two of the adjacent pressing members 120 in the side view direction. The feed-in rollers 122 are disposed in a feed-in end 1200 of the pressing members 120 and the feed-out rollers 124 are disposed in a feed-out end 1202 of the pressing members 120. In this embodiment, the feed-out ends 1202 of the pressing members 120 is close and relative to the feed-in end 1200 of the adjacent pressing members 120. And the direction guiding rollers 100 are located between the feed-in rollers 122 and the feed-out rollers 124 in the side view direction. Therefore, the laminated film 3 is dragged back and forth to form an S-like shape via the feed-in rollers 122, the feed-out rollers 124 and the direction guiding rollers 100 to pass through the pressing members 120 sequentially.

The unwinding mechanism 16 is disposed on one side of the lamination support platform 12 and the winding mechanism 18 is disposed on another side of the lamination support platform 12. One end of the laminated film 3 is winded on the unwinding mechanism 16, guided back and forth via the feed-in rollers 122, the feed-out rollers 124 and the direction guiding rollers 100 to pass through the pressing members 120 sequentially and then another end of the laminated film 3 is winded on the winding mechanism 18. The unwinding mechanism 16 may have a magnetic particle brake or with torque control function to control unwinding of the laminated film 3. The winding mechanism 18 may have a motor to wind the laminated film 3. Besides, two edge position controllers 22 are disposed corresponding to the unwinding mechanism 16 and the winding mechanism 18 respectively, to control the edge positions of the laminated film 3. Please be noted that the principle of operation of the edge position controllers 22 is well-known to those who skilled in this art, so repeated description is omitted.

The two length adjustment mechanisms 10 are capable of horizontal movement relative to the lamination support platform 12 to adjust a length of the laminated film 3 that does not located in the pressing members 120. In this embodiment, each of the two length adjustment mechanisms 10 further includes a supporter 102 and two movement elements 104. The two movement elements 104 are disposed on opposite ends of the supporter 102, and the direction guiding rollers 100 are disposed on the supporter 102. The movement elements 104 are capable of horizontal moving to drive the supporter 102 and the direction guiding rollers 100 to horizontally move. Therefore, an unpressed section, which is the length of the laminated film 3 that does not located in the pressing members 120, can be increased or decreased. The movement elements 104 may be composed of sliders or rollers, for example.

In one embodiment, the length of the laminated film 3 located between the two adjacent pressing members 120, i.e. the unpressed section, is equal to a length of the laminated film 3 located at one of the pressing members 120, i.e. a pressed section. Therefore, the continuous pressing without any invalid section, which does not be pressed, can be achieved.

The pressing mechanism 14 is disposed between the two length adjustment mechanisms 10 to provides a pressing force to the pressing members 120 to synchronously press the laminated film 3 located on the pressing members 120. The pressing mechanism 120 may be, but not limited to, a hydraulic pressure mechanism, which is configured to lift the pressing members 120. Then, the pressing members 120 are lifted to move up to press the laminated film 3 located at the pressing members 120. Moreover, the pressing members 120 may provide thermal energy to some materials of the laminated film 3 for curing to form the lamination structure, such as battery cells. During the lifting of the pressing members 120, the direction guiding rollers 100 are dragged by the laminated film 3, which are winded thereon, to move upward or downward.

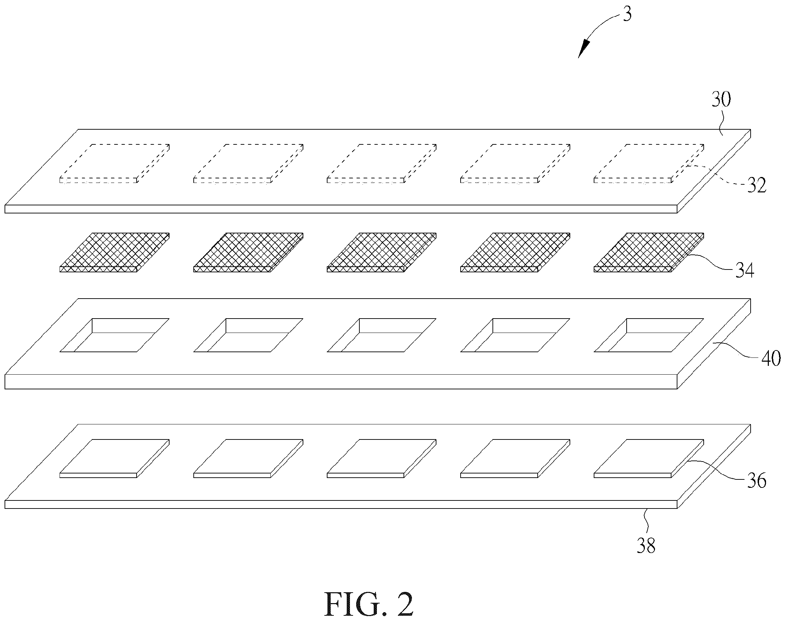

Please refer to FIG. 2, which is a schematic diagram of the laminated film 3, which is an electrode laminated band, according to this invention.

In this embodiment, the laminated film 3 is an electrode laminated band, shown in FIG. 2. For example, the electrode laminated band may include a first current collector 30, a positive electrode 32, a separator 34 and/or an electrolyte layer (not shown), a negative electrode 36 and a second current collector 38. Furthermore, the electrode laminated band includes a glue frame 40 between the first current collector 30 and the second current collector 38. The glue frame 40 surrounds the sides of the positive electrode 32, the separator 34 and/or the electrolyte layer and the negative electrode 36. The material of the glue frame 40 is selected from thermoplastic materials or thermosetting materials. The glue frame 40 may be layered structure. For example, the uppermost layer of the glue frame 40 is made of a material that can be adhered firmly to the first current collector 30. The lowermost layer of the glue frame 40 is made of a material that can be adhered firmly to the second current collector 38. A middle layer, located between the uppermost layer and the lowermost layer, of the glue frame 40 is made of a material that can be adhered firmly to the uppermost layer and the lowermost layer. The material of the middle layer may be a modified material of the uppermost layer and the lowermost layer. During the pressing process, the thermal energy provided by the pressing members 120 would make some materials, such as the glue frame 40 or the adhesive of the positive electrode 32, the negative electrode 36 and the separator 34, be adhered and cured. For example, the materials of the glue frame 40 may be selected from polypropylene (PP), polyethylene (PE), polyethylene terephthalate (PET), poly(trimethylene terephthalate) (PTT), polyimide (PI) or silicone. Therefore, the lamination machine 1 of this invention can synchronously press a plurality of battery cells, which are stacked in a single one axis, to significantly shorten the process time. Also, due to the pressing members 120 are stacked in a single axial direction, the occupied space by using the horizontal pressing platform to synchronously press several battery cells can be significantly decreased. Moreover, the shortage of differences of performances between the individual battery cells, processed via the different conventional machines, can also be avoided. Furthermore, in case of the laminated film 3 being the electrode laminated band, the radius of the used rollers of the lamination machine according to this invention, such as the unwinding mechanism 16, the direction guiding rollers 100 or the winding mechanism 18, is preferably more than 75 centimeters to avoid the positive electrode 32 or the negative electrode 36 be cracked resulting from bending.

In this embodiment, the two positioning sensors 20 are disposed corresponding to the pressing members 120. For example, one of the positioning sensors 20 is disposed corresponding to the feed-in end 1200 of the uppermost pressing member 120, and the other one of the positioning sensors 20 is disposed corresponding to the feed-out end 1202 of the lowermost pressing member 120, but not limited. Each of the two positioning sensors 20 is configured to detect a positioning point P of the laminated film 3. In general, the positioning point P is located at the current collector. During pressing process, the laminated film 3 is pressed to make the positioning point P be moved. In this case, the two length adjustment mechanisms 10 will be controlled to move to make the direction guiding rollers 100 drag the laminated film 3 to move, so that the positioning point P would return to the original sensing position corresponding to the two positioning sensors 20.

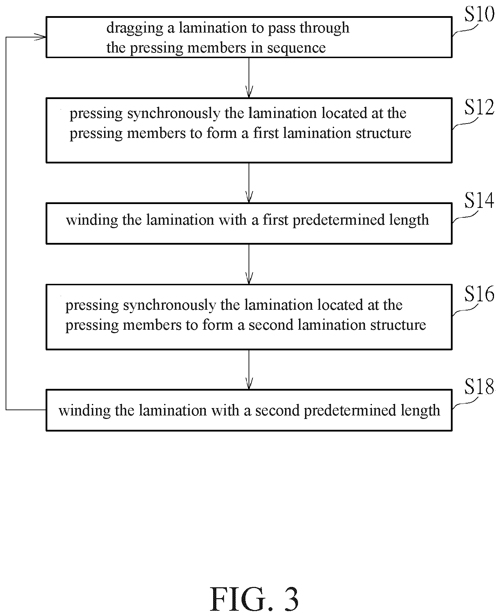

Please refer to FIG. 3, which is a flow chart illustrating the lamination method according to an embodiment of this invention.

In the lamination method in FIG. 3, the lamination machine 1 in FIG. 1 is applied. Therefore, the details of the lamination machine 1 do not repeated. First, in step S10, the laminated film 3 is dragged, via the feed-in rollers 122 and the feed-out rollers 124, to pass through the pressing members 120 in sequence. The laminated film 3 is dragged back and forth via the feed-in rollers 122, the feed-out rollers 124 and the direction guiding rollers 100. Then, in the step S12, the laminated film 3 located at the pressing members 120 is synchronously pressed to form a first lamination structure. In the step S14, the laminated film 3 is winded with a first predetermined length. In the step S16, the laminated film 3 located at the pressing members 120 is synchronously pressed to form a second lamination structure. A part of the second lamination structure are adjacent to a part of the first lamination structure. Then, in the step S18, the laminated film 3 is winded with a second predetermined length. Finally, repeating the above steps are preformed to press continuously the laminated film 3.

In one embodiment, when an amount of the pressing members 120 is N and N is a natural number bigger than 1, the first predetermined length is a length of the single one pressing member 120 and the second predetermined length is 2N-1 times of the length of the single one pressing member 120.

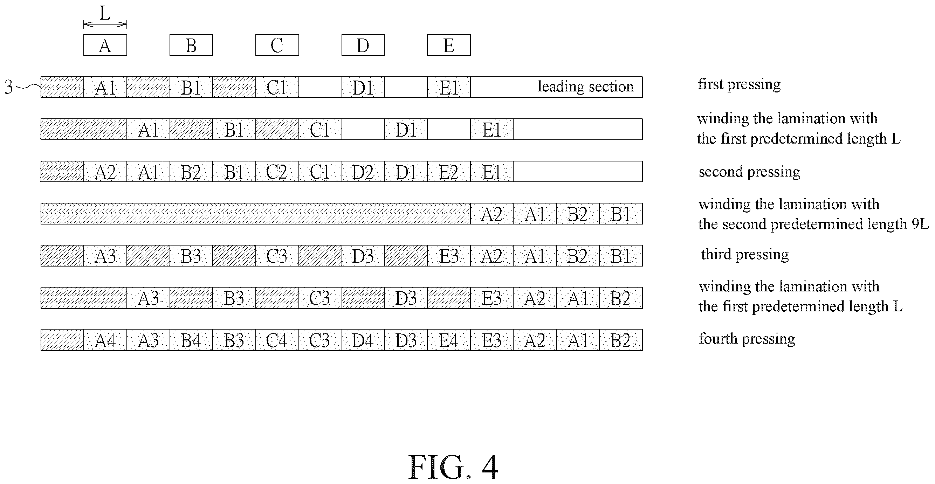

Please refer to FIG. 4, which is a schematic diagram of pressing the laminated film, which an amount of the pressing members is N and N is odd, according to this invention.

As shown in FIG. 4, the amount of the pressing members A-E is five, i.e. N=5. The length of the single one pressing member A-E is L, and the first predetermined length is also L. The second predetermined length is 9L. In the first pressing, the first lamination structure A1-E1 is formed. Then, the laminated film 3 is winded with the first predetermined length L. After that, the second pressing is performed to form the second lamination structure A2-E2. After the second pressing, the laminated film 3 is winded with the second predetermined length 9L. After that, the third pressing is performed to form the first lamination structure A3-E3. After the third pressing, the laminated film 3 is winded with the first predetermined length L. Then, the fourth pressing is performed to form the second lamination structure A4-E4. Therefore, the continuous pressing without any invalid section, which does not be pressed, can be achieved.

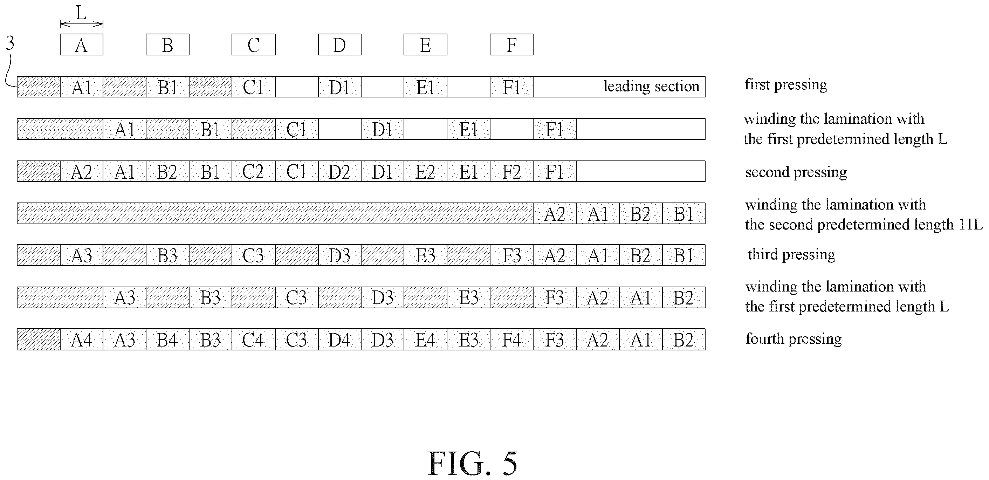

Please refer to FIG. 5, which is a schematic diagram of pressing the laminated film, which an amount of the pressing members is N and N is even, according to this invention.

As shown in FIG. 5, the amount of the pressing members A-F is six, i.e. N=6. The length of the single one pressing member A-F is L, and the first predetermined length is also L. The second predetermined length is 11L. In the first pressing, the first lamination structure A1-F1 is formed. Then, the laminated film 3 is winded with the first predetermined length L. After that, the second pressing is performed to form the second lamination structure A2-F2. After the second pressing, the laminated film 3 is winded with the second predetermined length 11L. After that, the third pressing is performed to form the first lamination structure A3-F3. After the third pressing, the laminated film 3 is winded with the first predetermined length L. Then, the fourth pressing is performed to form the second lamination structure A4-F4. Therefore, the continuous pressing without any invalid section, which does not be pressed, can be achieved.

In another embodiment, when the amount of the pressing members 120 is 2N+1 and N is a natural number, both the first predetermined length and the second predetermined length are 2N+1 times of the length of the single one pressing member 120.

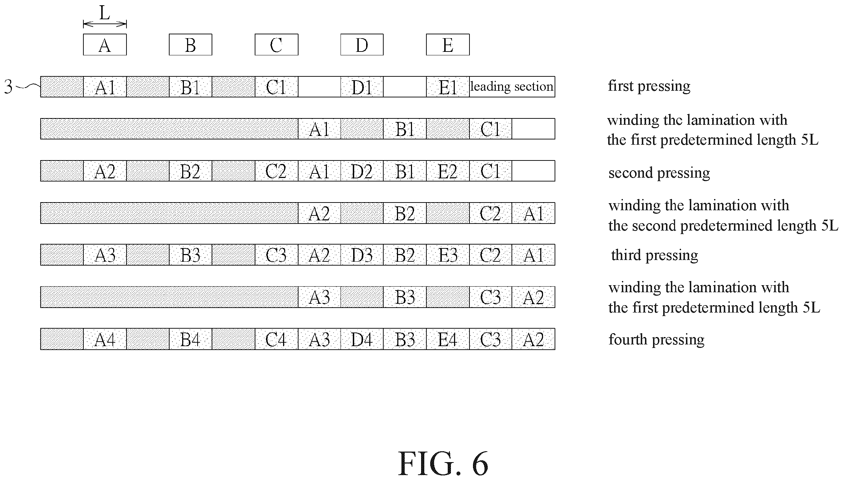

Please refer to FIG. 6, which is a schematic diagram of pressing the laminated film, which an amount of the pressing members is 2N+1, according to this invention.

As shown in FIG. 6, the amount of the pressing members A-E is five, i.e. N=2. The length of the single one pressing member A-E is L, and the first predetermined length and the second predetermined length are 5L. In the first pressing, the first lamination structure A1-E1 is formed. Then, the laminated film 3 is winded with the first predetermined length 5L. After that, the second pressing is performed to form the second lamination structure A2-E2. After the second pressing, the laminated film 3 is winded with the second predetermined length 5L. After that, the third pressing is performed to form the first lamination structure A3-E3. After the third pressing, the laminated film 3 is winded with the first predetermined length 5L. Then, the fourth pressing is performed to form the second lamination structure A4-E4. Therefore, the continuous pressing without any invalid section, which does not be pressed, can be achieved.

Please be noted that there has a leading section of the laminated film 3 before pressing, see FIGS. 4-6. The leading section may be pressed. But in the beginning of the initial pressing, the leading section will not be used.

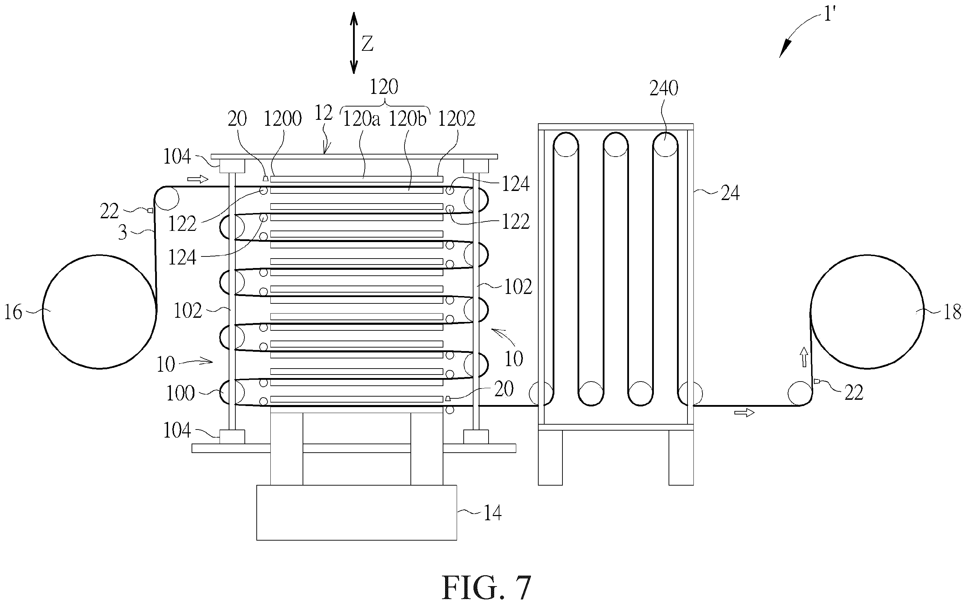

Please refer to FIG. 7, which is a schematic diagram of the lamination machine according to another embodiment of this invention.

Comparing to the lamination machine 1 of FIG. 1, the lamination machine 1' further includes a storage shelf 24. The storage shelf 24 is disposed on one side of the lamination support platform 12, as shown in FIG. 7, and includes a plurality of storage rollers 240. At least one of the storage rollers 240 is movable. The laminated film 3 is stored in the storage shelf 24 after being pressed via the lamination machine 1'. The storage rollers 240 located at the upper portion are able to move upward and downward to increase or decrease the width of the stored lamination structure. Moreover, in case of the laminated film 3 being the electrode laminated band, the radius of the storage rollers 240 is preferably more than 75 centimeters to avoid the positive electrode or the negative electrode be cracked resulting from bending.

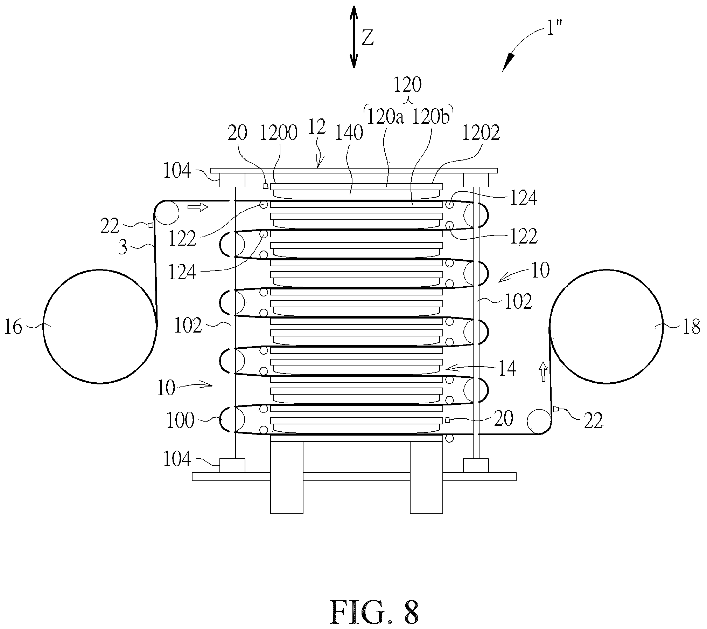

Please refer to FIG. 8, which is a schematic diagram of the lamination machine according to another embodiment of this invention.

Comparing to the lamination machine 1 of FIG. 1, the pressing mechanism 14 of the lamination machine 1" includes a plurality of airbags 140, as shown in FIG. 8. Each of the airbags 140 is disposed on one of two adjacent pressing members 120 and configured to press another one.

Therefore, the hydraulic pressure mechanism or the airbags may be used to serve the pressing mechanism of this invention.

Accordingly, the lamination machine in this invention includes a plurality of pressing members, which are stacked in a single axial direction. Thus, the pressing members are capable of synchronous pressing a plurality of laminated films located at the pressing members to form a plurality of lamination structure. In one embodiment, the laminated film is the laminated structure for producing battery cells. In this case, the laminating machine and laminating method of the invention can press the laminated film, passing through the pressing members, to simultaneously form several battery cells. The processing time can be greatly reduced. Due to the pressing members are stacked in a single axial direction, the occupied floor area by these pressing members can be significantly decreased. In the limited space, several battery cells can be synchronously pressed in one pressing process. Moreover, the shortage of differences of performances between the individual battery cells, processed via the different conventional machines, can also be avoided.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A lamination machine (1, 1', 1") comprising:
two length adjustment mechanisms (10), capable of horizontal movement, wherein each of the two length adjustment mechanisms (10) includes a plurality of direction guiding rollers (100);
a lamination support platform (12), disposed between the two length adjustment mechanisms (10), including:
a plurality of pressing members (120), stacked in a single axial direction (Z), wherein each of the direction guiding rollers (100) is disposed between two of the pressing members (120);
a plurality of feed-in rollers (122), disposed in a feed-in end (1200) of the pressing members (120); and
a plurality of feed-out rollers (124), disposed in a feed-out end (1202) of the pressing members (120); and
a pressing mechanism (14), disposed between the two length adjustment mechanisms (10);
wherein the feed-in rollers (122), the feed-out rollers (124) and the direction guiding rollers (100) drag a laminated film (3) to pass through the pressing members (120) in sequence, and wherein the pressing mechanism (14) provides a pressing force to the pressing members (120) to synchronously press the laminated film (3) located on the pressing members (120).

2. The lamination machine (1, 1', 1 ") of claim 1, wherein each of the two length adjustment mechanisms (10) further includes a supporter (102) and two movement elements (104), which disposed on opposite ends of the supporter (102), and the direction guiding rollers (100) are disposed on the supporter (102).

3. The lamination machine (1, 1', 1") of claim 1, wherein a length of the laminated film (3) between two adjacent pressing members (120) is equal to a length of each of the pressing members (120).

4. The lamination machine (1, 1', 1") of claim 1, further comprising two positioning sensors (20), which are disposed corresponding to the pressing members (120), and each of the two positioning sensors (20) is configured to detect a positioning point (P) of the laminated film (3).

5. The lamination machine (1, 1', 1") of claim 1, further comprising a storage shelf (24), disposed on one side of the lamination support platform (12), and the storage shelf (24) includes a plurality of storage rollers (240) and at least one of the storage rollers (240) is movable.

6. The lamination machine (1, 1', 1") of claim 1, wherein the pressing mechanism (14) is a hydraulic pressure mechanism, which is configured to lift the pressing members (120).

7. The lamination machine (1, 1', 1") of claim 1, wherein the pressing mechanism (14) includes a plurality of airbags (140), and each of the airbags (140) is disposed on one of two adjacent pressing members (120) and configured to press another one.

8. The lamination machine (1, 1', 1") of claim 1, further comprising an unwinding mechanism (16) and a winding mechanism (18), wherein the unwinding mechanism (16) is disposed on one side of the lamination support platform (12) and the winding mechanism (18) is disposed on another side of the lamination support platform (12), and one end of the laminated film (3) is winded on the unwinding mechanism (16) and another end of the laminated film (3) is winded on the winding mechanism (18).

9. A lamination method, comprising the steps of:
providing a lamination machine (1, 1', 1"), including two length adjustment mechanisms (10) and a lamination support platform (12) disposed between the two length adjustment mechanisms (10), wherein the lamination support platform (12) includes a plurality of pressing members (120), which are stacked in a single axial direction (Z);
dragging a laminated film (3) to pass through the pressing members (120) in sequence;
pressing synchronously the laminated film (3) located at the pressing members (120) to form a first lamination structure (A1-F1, A3-F3);
winding the laminated film (3) with a first predetermined length;
pressing synchronously the laminated film (3) located at the pressing members (120) to form a second lamination structure (A2-F2, A4-F4), wherein a part of the second lamination structure (A2-F2, A4-F4) are adjacent to a part of the first lamination structure (A1-F1, A3-F3);
winding the laminated film (3) with a second predetermined length; and
repeating the above steps to press continuously the laminated film (3);
wherein when an amount of the pressing members (120) is N and N is a natural number bigger than 1, the first predetermined length is a length of the single one pressing member (120) and the second predetermined length is 2N-1 times of the length of the single one pressing member (120); and
wherein when the amount of the pressing members (120) is 2N+1 and N is a natural number, both the first predetermined length and the second predetermined length are 2N+1 times of the length of the single one pressing member (120).

10. The lamination method of claim 9, wherein the laminated film (3) is an electrode laminated band.
